# EUROPEAN PATENT SPECIFICATION

(11) **EP 1 705 026 B1**
(45) Date of publication and mention of the grant of the patent: **05.01.2011**
(21) Application number: 06010546.7
(22) Date of filing: 15.10.2002
(51) Int. Cl.: B41M 3/14

(54) **Printer output image forgery preventing method**
Verfahren zur Druckbildfälschungsvermeidung
Procédé empêchant la falsification d'images imprimées

(30) Priority: 16.10.2001 JP 2001317955
(43) Date of publication of application: 27.09.2006
(62) Divisional of application: 02023024.9
(73) Proprietor: DAI NIPPON PRINTING CO., LTD., Tokyo 162-8001 (JP)
(72) Inventor: Hamashima, Mitsuhiro, 1-chome Shinjuku-ku Tokyo 162-8001 (JP); Kawabata, Kazuhiro, 1-chome Shinjuku-ku Tokyo 162-8001 (JP); Shibasaki, Naoji, 1-chome Shinjuku-ku Tokyo 162-8001 (JP)
(74) Representative: Müller-Boré & Partner Patentanwälte

(56) References cited:
- EP-A- 0 256 176
- EP-A- 0 930 979
- EP-A1- 0 982 149
- US-A- 5 149 140
- US-A- 5 487 567
- US-A- 5 935 694

## Description

### TECHNICAL FIELD

The present invention relates to a printer output image forgery preventing method that put restraints on copying an image provided by a printer to prevent forgery.

### BACKGROUND ART

A printed sheet is provided with an invisible reproduction-restraining pattern. For example, two invisible dot patterns respectively having different dot pitches and having the same dot percentage are printed on a printed sheet such that contiguous parts of the two patterns have the same dot percentage. When the printed sheet is copied the dot pattern having the greater dot pitches becomes visible and discriminates the copy from the original printed sheet (JP-A No. 247089/1994).

Different copying machines have different resolution levels, respectively. An invention disclosed in JP-A No. 247088/1994 uses a plurality of patterns respectively having different resolution levels, and prints dots, line intervals or the thickness of intervals of a set of parallel lines arranged at intervals equal to twice the thickness in different gradations to facilitate identifying copies.

The foresaid printed sheets are printed in large quantities using an original plate. Therefore, the reproduction-restraining pattern is fixed, once the original plate is made. Therefore, another original plate must be made when the reproduction-restraining pattern needs to be changed.

Recently, there have been marketed printers capable of easily printing images corresponding to image data recorded on various digital media including PC cards, smart media, CD-ROMs and digital cameras. On-demand printers, i.e., large-scale printers, which are installed in convenience stores or places where people gather and capable of printing out images in response to a print start command given after depositing a predetermined charge, have been prevalently used in recent years.

Usually images printed by such printers are original images of individuals and it is requested that the images are not copied without permission. Photographs of stars, tickets and identification cards which are used to be printed by printing machines are printed by printers using digital image data. Therefore, it is very important to prevent the unpermitted copying and the forging of those printed images. Conventional reproduction-restraining patterns are not suitable for handy printers because those reproduction-restraining patterns are printed by using original plates.

Document EP 0 930 979 discloses a self-verifying security document which comprises a flexible sheet formed from a plastics substrate bearing indicia. The sheet has a transparent window of transparent plastics material which includes self-verification means for verifying a security device provided at a laterally spaced second portion of the sheet when the sheet is bent of folded to bring the window into register with the security device. The self-verification means may be an optical lens for reading an area of microprinting, or an optical filter for viewing an area printed with metameric inks, or the self-verification means and the security device may be polarising windows or Moiré inducing patterns.

Document EP 0 982 149 A1 discloses a fluorescent latent image transfer film which makes it possible to form a fluorescent latent image excellent in transferablitly and gradiation-property, a transfer method using the same, and a security pattern formed matter.

Thus according to an aspect, it is a problem to provide a printer output image forgery preventing method to be carried out by a printing system that does not use any original plate, capable of a reproduction-restraining function and a forgery preventing function.

This problem is solved by the printer output image forgery preventing method having the features disclosed in claim 1. Preferred embodiments are defined in the dependent subclaims.

A printer output image forgery preventing method according to the present invention comprises the steps of: forming an image having an image pattern on an image-receiving sheet by a thermal transfer printing method; and superposing a transparent sheet carrying a predetermined discrimination pattern on the image formed on the image-receiving sheet such that the discrimination pattern is caused to appear by an moiré effect of superposition of the predetermined discrimination pattern on the image formed on the image-receiving sheet.

In the printer output image forgery preventing method according to the present invention, the image formed on the image-receiving sheet further includes a reproduction-restraining pattern.

In the printer output image forgery preventing method according to the present invention, the discrimination pattern includes a warning message, date of issue, serial number, a designation, a logo or a concealed picture.

### BRIEF DESCRIPTION OF THE DRAWINGS

Fig. 1 is a block diagram of assistance in explaining a printer output image forming method ;
Fig. 2 is a view of a printed sheet carrying a reproduction-restraining pattern transferred thereto;
Fig. 3 is a view showing a background dot pattern and a reproduction-restraining dot pattern; and
Fig. 4 is a view of assistance in explaining a printer output image forgery preventing method in a preferred embodiment according to the present invention.

### BEST MODE FOR CARRYING OUT THE INVENTION

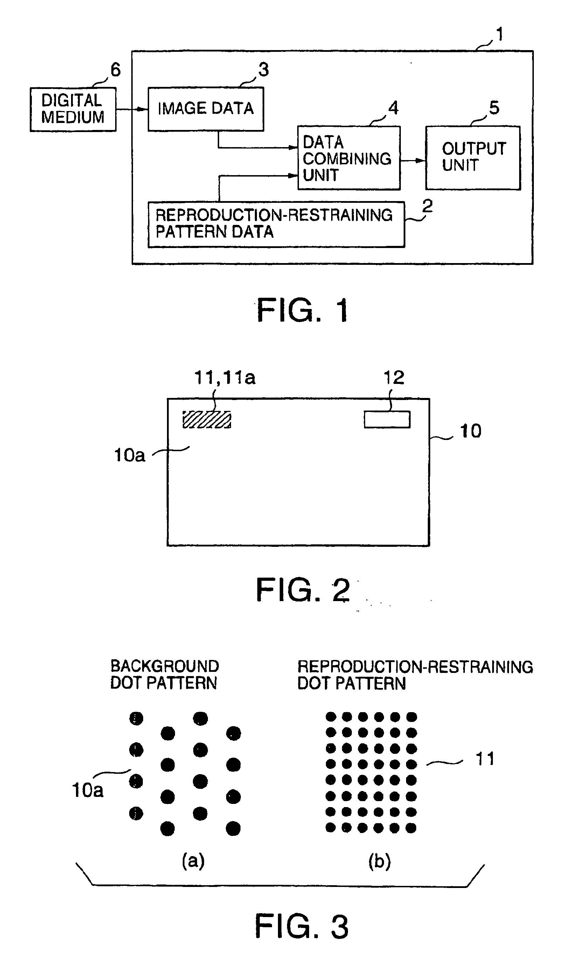

Fig. 1 is a block diagram of assistance in explaining a printer output image forming method . Although preferred embodiments of the present invention will be described as applied to an on-demand printer system, the present invention is not limited in its practical application thereto and is applicable to optional printer systems.

An on-demand printer system 1 holds a reproduction-restraining pattern data 2. A data combining unit 4 combines image data 3 and reproduction-restraining pattern data 2 to provide a composite image data. An output unit 5 prints a composite image represented by the composite image data by a transfer printing method, such as a sublimation transfer printing method or a thermal transfer printing method. The reproduction-restraining pattern data 2 represents a reproduction-restraining pattern 11. The printed reproduction-restraining pattern 11 is visually unrecognizable. The image data 3 includes that of a background pattern 10a. The background pattern 10a is printed together with the reproduction-restraining pattern 11. When a user ticket issue menu is selected on the on-demand printer system 1 and fare is paid, image data 3 representing an image for a specified ticket is read from a hard disk, the image data 3 is combined with the reproduction-restraining pattern data 2 to provide a composite image data, and the background pattern 10a by the image data 3 is printed together with the reproduction-restraining pattern 11 on a recording sheet. The reproduction- restraining pattern data 2 does not need necessarily to be held by the on-demand printer system 1, but may be produced by the on-demand printer system 1 immediately before printing the composite image data.

Fig. 2 shows, by way of example, a printed sheet (printed image-receiving sheet) 10 carrying the reproduction-restraining pattern 11. As shown in Fig. 2, the reproduction-restraining pattern 11 is printed in an area outside or overlapping an image area of the surface of the printed sheet 10. The reproduction-restraining pattern 11 is visually unrecognizable. The background patter 10a is a coarse dot pattern of large dots as shown in Fig. 3(a), while the reproduction-restraining pattern 11 is a dense dot pattern of small dots as shown in Fig. 3(b). The background pattern 10a and the reproduction-restraining pattern 11 are the same in the sum of the areas of dots in a unit area. Therefore, it is difficult to recognize the reproduction-restraining patter 11 visually. When a reader having a resolving power and included in a copying machine is unable to read the dots of the reproduction-restraining pattern 11 correctly or when the reader is able to read the dots of the reproduction-restraining pattern 11 correctly but the copying machine is unable to record the reproduction-restraining patter 11 correctly, the reproduction-restraining pattern 11 consisting of the small dots cannot be correctly copied when the printed sheet 10 is copied. Consequently, parts corresponding to the dots of the reproduction-restraining pattern 11 in the printed sheet 10 become void, which is a proof of the copy. Although this printer output image forming method restrains copying by making the reproduction-restraining pattern 11 disappear to restrain copying, the printed sheet and a copy may be discriminated from each other by some pattern that is made to develop by a special operation like copying.

The size of the dots forming the reproduction-restraining pattern 11 is determined so as to conform to various copying machines respectively having different resolving powers. The size of the dots forming the reproduction-restraining pattern 11 is varied stepwise or continuously from position to position in a printing region so that the size of the dots corresponds to the different resolving powers of various copying machines. Thus, different parts, respectively corresponding to the different resolving powers of the copying machines, of the reproduction-restraining pattern 11 can be made obvious. The background patter 10a may be a dense dot pattern of small dots and the reproduction-restraining pattern 11 may be a coarse dot pattern of large dots. In this case, the background pattern 10a cannot be correctly copied, and the reproduction-restraining patter 11 becomes obvious. The reproduction-restraining pattern 11 may be formed by combining a set of coarsely arranged parallel lines and a set of densely arranged parallel lines. The reproduction-restraining pattern 11 may be formed by combining dots having different shades. Since a sublimation transfer printing method is capable of controlling the shade of each dot, a dot formed by printing two dots having a gradation of 128, and a dot formed by printing four dots of a gradation half that of the two dots have the same shade. The boundary between the reproduction-restraining pattern 11 and the background pattern 10a can be made obscure by combining dots respectively having different shades. An additional reproduction-restraining pattern 11a of fine lines may be printed on the image-receiving sheet 10 beforehand, and the coarse reproduction-restraining patter 11 may be formed on the image receiving sheet 10 by a transfer printing method to form a pattern consisting of the coarsely arranged lines and the densely arrange lines. There is not any restrictions on the shapes and colors of the reproduction- restraining patters 11 and 11a.

The present invention is not limited in its practical application to the embodiment described hereinafter and various modifications are possible. The present inventionmay be used in combination with other reproduction preventing techniques.

For example, a reproduction-restraining pattern 11 representing a logo may be printed beforehand on the front or the back surface of the image-receiving sheet 10, the reproduction-restraining pattern 11 may be printed on the image-receiving sheet 10 beforehand by a micro printing method, the reproduction-restraining pattern 11 may be formed by partly changing energy when the overcoating layer is transferred or a hologram 12 may be formed in the image-receiving sheet 10. The reproduction-restraining pattern 11 and the background pattern 10a may be formed by transfer printing using dyes or pigments having different characteristics, respectively.

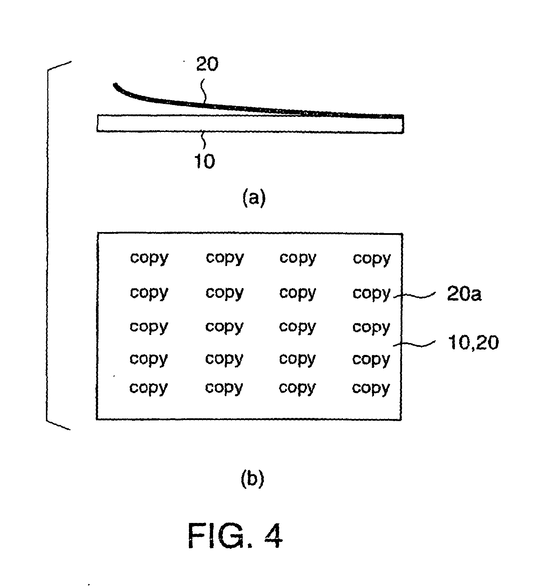

Fig. 4 is a view of assistance in explaining a printer output image forgery preventing method in a preferred embodiment according to the present invention.

A background pattern (image pattern) 10a as shown in Fig. 3 (a) is printed on a printed sheet (image-receiving sheet) 10. A discrimination pattern 20a of a screen ruling or a dot angle different from that of the background pattern 10a shown in Fig. 3(a) is formed on the image-receiving sheet 10 such that, when a transparent sheet 20 is superposed on the printed sheet 10, words "copy" as shown in Fig. 4(b) are caused to appear by the moiré effect of superposition of the discrimination pattern 20a on the background pattern (image pattern) 10a. The arrangement of the words 'copy' is the discrimination pattern 20a to discriminate the printed sheet 10 from its copy. It is possible to provide the printed sheet 10 with a reproduction-restraining effect by printing a reproduction-restraining pattern 11 on the printed sheet 10. The transparent sheet 20, similarly to the printed sheet 10, can be printed by a print system.

The reproduction-restraining pattern 11 and the discrimination pattern 20a for forgery prevention may be an optional characters or patterns, such as a warning message, date of issue, serial number, a designation, a logo or a concealed picture. The present invention is applicable not only to reproduction-restraining but also to making a concealed picture become visible and to making an answer to a quiz to appear when the printed sheet 10 is copied or when a transparent sheet is superposed on the printed sheet 10.

A forgery preventing function can be achieved by using fluorescent colors that cannot be reproduced by ordinary printers for printing an image on the image-receiving sheet 10 by a thermal transfer printing method.

As apparent from the foregoing description, it is possible to provide a printed sheet with a reproduction-restraining function and effects of a concealed picture simply by combining a reproduction-restraining pattern data produced by combining lines or dots of different densities and dots of different shades with image data of an image to be printed. It is possible to provide a printed sheet with a forgery preventing function by a similar method.

## Claims

1. A printer output image forgery preventing method comprising the steps of:
forming a background pattern (10a) on an image-receiving sheet (10) by a thermal transfer printing method; and
forming a discrimination pattern (20a) of a screen ruling or dot angle different from that of the background pattern (10a) on the image-receiving sheet (10);
superposing a transparent sheet (20) carrying a predetermined discrimination pattern on the image-receiving sheet (10) such that an image is caused to appear by a moire effect of superposition of the predetermined discrimination pattern and the discrimination pattern (20a) formed on the image-receiving sheet (10).

2. The printer output image forgery preventing method according to claim 1,
wherein
the image-receiving sheet (10) further includes a reproduction-restraining pattern (11).

3. The printer output image forgery preventing method according to claim 1 or 2, wherein
the image includes a warning message, date of issue, serial number, a designation, a logo or a concealed picture.

## Patentansprüche

1. Verfahren zur Druckbildfälschungsvermeidung, umfassend die Schritte:
Bilden eines Hintergrundmusters (10a) auf einem ein Bild empfangenden Blatt bzw. Bildempfangsblatt (10) durch ein Thermotransferdruckverfahren; und
Bilden eines Unterscheidungsmusters (20a) einer Schirmlinie bzw. eines Schirmgitters oder eines Punktwinkels verschieden von jener(m) des Hintergrundmusters (10a) auf dem das Bild empfangenden Blatt (10);
Überlagern eines transparenten Blatts (20), welches ein vorbestimmtes Unterscheidungsmuster trägt, auf dem das Bild empfangenden Blatt (10), so dass ein Bild veranlasst wird, durch einen Moiré-Effekt einer Überlagerung des vorbestimmten Unterscheidungsmusters und des Unterscheidungsmusters (20a) zu erscheinen, welches auf dem das Bild empfangenden Blatt (10) ausgebildet wird.

2. Verfahren zur Druckbildfälschungsvermeidung nach Anspruch 1, wobei
das das Bild empfangende Blatt (10) darüber hinaus ein eine Reproduktion beschränkendes bzw. behinderndes Muster (11) beinhaltet.

3. Verfahren zur Druckbildfälschungsvermeidung nach Anspruch 1 oder 2, wobei
das Bild eine Warnbotschaft, ein Ausgabedatum, eine Seriennummer, eine Bezeichnung, ein Logo oder ein verborgenes Bild beinhaltet.

## Revendications

1. Procédé d'empêchement de la falsification d'une image sortie sur une imprimante, comprenant les étapes consistant à :
former un motif (10a) d'arrière-plan sur une feuille réceptrice (10) d'image par un procédé d'impression par transfert thermique ; et
former un motif (20a) de discrimination d'un réglage d'écran ou d'un angle de point différent de celui du motif (10a) d'arrière-plan sur la feuille réceptrice (10) d'image ;
superposer une feuille transparente (20) comportant un motif de discrimination prédéterminé sur la feuille réceptrice (10) d'image de sorte qu'une image soit amenée à apparaître par effet de moiré de superposition du motif de discrimination prédéterminé et du motif (20a) de discrimination formé sur la feuille réceptrice (10) d'image.

2. Procédé d'empêchement de la falsification d'une image sortie sur une imprimante selon la revendication 1, dans lequel
la feuille réceptrice (10) d'image comprend en outre un motif (11) de prévention de reproduction.

3. Procédé d'empêchement de la falsification d'une image sortie sur une imprimante selon la revendication 1 ou 2, dans lequel
l'image comprend un message d'avertissement, une date d'émission, un numéro de série, une désignation, un logo ou une représentation masquée.
